# EUROPÄISCHE PATENTSCHRIFT

(11) **EP 2 949 390 B1**
(45) Veröffentlichungstag und Bekanntmachung des Hinweises auf die Patenterteilung: **15.08.2018**
(21) Anmeldenummer: 14170213.4
(22) Anmeldetag: 28.05.2014
(51) Int. Cl.: B01J 20/24, B01J 20/26, B01J 20/28, C09K 3/32, E02B 15/08, C02F 1/40, C02F 1/28, C02F 1/32, C02F 103/08, C02F 101/32

(54) **ADSORPTIONSANLAGE**
ADSORPTION PLANT
INSTALLATION D'ADSORPTION

(43) Veröffentlichungstag der Anmeldung: 02.12.2015
(73) Patentinhaber: Margraf-Gerdau, Vera, 45721 Haltern am See (DE); Rathmann, Michael, 21614 Buxtehude (DE)
(72) Erfinder: Margraf-Gerdau, Vera, 45721 Haltern am See (DE); Rathmann, Michael, 21614 Buxtehude (DE)
(74) Vertreter: Rohmann, Michael

(56) Entgegenhaltungen:
- EP-A1- 1 287 885
- EP-A1- 1 288 164
- DE-T2- 68 926 550
- US-A- 4 840 734

## Beschreibung

Die Erfindung betrifft eine Adsorptionsanlage. Die Erfindung bezieht sich vor allem auf die Adsorption von organischen Substanzen, insbesondere auf die Adsorption von Kohlenwasserstoffen in flüssigen Medien und vorzugsweise in wässrigen Medien bzw. in Wasser. Bei den aus den fluiden Medien zu adsorbierenden Kohlenwasserstoffen handelt es sich beispielsweise um aromatische Kohlenwasserstoffe (BTEX, BTX).

Eine bevorzugte Anwendung der Erfindung bezieht sich auf die Reinigung von sogenanntem Lagerstättenwasser, das bei der Förderung von Erdgas und Erdöl an die Oberfläche gelangt. Dieses Lagerstättenwasser enthält in der Regel eine Mehrzahl von Verunreinigungen, unter anderem Kohlenwasserstoffe und Schwermetalle. Bei dem Einsatz der sogenannten Hydraulic-Fracturing-Methode zur Stimulation bei der Bohrung, vermischt sich das Lagerstättenwasser zusätzlich mit sogenannten Frack-Fluiden, wobei es sich unter anderem um Biozide und andere toxische Chemikalien handelt. Auch die zurückströmenden Frack-Fluide können mit Hilfe der Erfindung durch Adsorption gereinigt werden.

Adsorptionsmittel, Verfahren zur Herstellung von Adsorptionsmitteln und Adsorptionsanlagen sind aus der Praxis in unterschiedlichen Ausführungsformen bekannt.

Aus der EP 1 288 164 A1 ist ein Verfahren sowie eine mobile Reinigungsanlage zur Reinigung von mit organischen Verbindungen verunreinigten Abwässern bekannt. In einer der Reinigungsstufen dieser Anlage kommt Kautschuk, welcher Ruß als Füllstoff enthalten kann, als Adsorptionsmittel zum Einsatz. Diese bekannten Maßnahmen lassen aber häufig in Bezug auf ihren Reinigungsgrad bzw. Adsorptionsgrad zu wünschen übrig und/oder sind nur aufwendig und kostspielig durchführbar. Auch die funktionssichere Handhabung und Auswechselbarkeit von Adsorptionsmitteln stellt häufig ein Problem dar. Bekannte Adsorptionsanlagen zeichnen sich oftmals lediglich durch einen geringen Wirkungsgrad aus.

Demgegenüber liegt der Erfindung das technische Problem zugrunde, eine Adsorptionsanlage bereitzustellen, mit welcher die vorstehend beschriebenen Nachteile eliminiert bzw. zumindest reduziert werden können.

Zur Lösung dieses technischen Problems lehrt die Offenbarung zunächst ein Verfahren zur Herstellung eines Adsorptionsmittels, insbesondere für die Adsorption von organischen Substanzen in fluiden bzw. in flüssigen Medien, wobei zumindest ein Kautschuk in fein verteilter bzw. in fein zerkleinerter Form mit zumindest einem pulverförmigen - vorzugsweise trockenen - Füllstoff, insbesondere mit pulverförmigem Ruß gemischt wird, so dass eine knetbare und formbare Mischung bzw. Masse entsteht, wobei aus der Mischung/Masse Formteilchen, insbesondere als Pellets, geformt werden, wobei der maximale Durchmesser der Formteilchen bzw. Pellets 0,8 bis 5 mm, vorzugsweise 1 bis 4,7 mm und bevorzugt 1,2 bis 4 mm beträgt. Gemäß einer besonders bevorzugten Ausführungsform beträgt der maximale Durchmesser der Formteilchen bzw. Pellets 1,3 bis 3,5 mm und sehr bevorzugt 1,5 bis 3 mm.

Maximaler Durchmesser meint im Rahmen der Erfindung, die maximale Ausdehnung der erfindungsgemäßen Formteilchen bzw. Pellets. Bei zylinderförmigen Pellets entspricht der maximale Durchmesser bzw. entspricht die maximale Ausdehnung der Pellets der Ausdehnung in Zylinderlängsrichtung. - Es liegt im Rahmen der Erfindung, dass der minimale Durchmesser der Formteilchen bzw. Pellets 0,7 bis 4,5 mm, vorzugsweise 0,8 bis 3,5 mm und bevorzugt 1 bis 3 mm beträgt. Minimaler Durchmesser meint dementsprechend die minimale Ausdehnung der Formteilchen bzw. Pellets. Bei zylinderförmigen Pellets entspricht der minimale Durchmesser der Ausdehnung der Pellets quer zur Zylinderlängsachse. Es versteht sich, dass bei kugelförmigen Pellets der maximale Durchmesser dem minimalen Durchmesser entspricht bzw. im Wesentlichen entspricht.

Erfindungsgemäß wird die Mischung bzw. Masse mit den Hauptbestandteilen Kautschuk und Füllstoff bzw. Ruß zu Formteilchen geformt und bevorzugt zu Pellets pelletisiert. Nach besonders bevorzugter Ausführungsform liegen also Adsorptionsteilchen in Form von Pellets vor. - Die gebildete knetbare bzw. formbare Mischung/Masse und die daraus geformten Formteilchen, insbesondere Pellets, weisen als Hauptbestandteil Kautschuk und Füllstoff auf. Dabei liegen Kautschuk und Füllstoff bzw. Ruß in der Mischung und in den Formteilchen bzw. Pellets zu mindestens 80 Gew.-%, bevorzugt zu mindestens 85 Gew.-% und besonders bevorzugt zu mindestens 90 Gew.-% vor. Eine sehr empfohlene Ausführungsform der Erfindung ist dadurch gekennzeichnet, dass in der knetbaren und formbaren Mischung/Masse und in den daraus geformten Formteilchen Pellets das Gewichtsverhältnis bzw. Massenverhältnis von Kautschuk zu Füllstoff bzw. Ruß 0,5 : 3 bis 1,5 : 3 und bevorzugt 0,75 : 3 bis 1,25 : 3 beträgt. Nach sehr empfohlener Ausführungsform der Erfindung beträgt das Gewichtsverhältnis bzw. Massenverhältnis von Kautschuk zu Füllstoff bzw. Ruß 1 : 3 bzw. in etwa 1 : 3. Es liegt somit im Rahmen der Erfindung, dass der Füllstoff bzw. der Ruß im Vergleich zum Kautschuk im Überschuss vorliegt.

Zweckmäßigerweise wird aus dem fein verteilten bzw. fein zerkleinerten Kautschuk und dem Füllstoff bzw. Ruß eine im Wesentlichen trockene Mischung gebildet. Es wird nachfolgend noch erläutert, dass nach besonders bevorzugter Ausführungsform der Erfindung der Kautschuk in Form einer wässrigen Latex-Emulsion eingesetzt wird. Nichtsdestoweniger kann aufgrund des Überschusses des pulverförmigen Füllstoffes bzw. des pulverförmigen Rußes und des Feststoffanteils an Kautschuk in der Emulsion eine im Wesentlichen trockene knetbare Mischung bzw. Masse erhalten werden. Wie ebenfalls weiter unten noch erläutert, werden nach sehr empfohlener Ausführungsform der Erfindung die geformten Formteilchen bzw. Pellets anschließend noch getrocknet bzw. nachgetrocknet, so dass auch die Restfeuchte entfernt bzw. im Wesentlichen entfernt wird. Es liegt im Rahmen der Erfindung, dass die Formteilchen bzw. die Pellets in Form von losem trockenem Schüttgut als Adsorptionsmittel eingesetzt werden.

Eine besonders empfohlene Ausführungsform des Verfahrens ist dadurch gekennzeichnet, dass der Kautschuk in Form einer wässrigen Latex-Emulsion eingesetzt wird, wobei vorzugsweise die Latex-Emulsion einen Feststoffanteil (Kautschuk) von 20 bis 60 Gew.-%, bevorzugt von 22 bis 60 Gew.-% und sehr bevorzugt von 23 bis 50 Gew.-% aufweist. - Vorzugsweise wird im Rahmen des erfindungsgemäßen Verfahrens zumindest ein Kautschuk aus der Gruppe "Emulsions-Styrol-Butadien-Kautschuk (ESBR), Styrol-Butadien-Kautschuk (SBR), Naturkautschuk" eingesetzt. Es liegt im Rahmen der Erfindung, dass eine wässrige Emulsion bzw. eine Latex-Emulsion dieses Kautschuks verwendet wird. Besonders bevorzugt wird im Rahmen der Erfindung mit ESBR gearbeitet. Grundsätzlich können bei dem erfindungsgemäßen Verfahren aber auch andere Kautschuke bzw. Synthesekautschuke eingesetzt werden.

Eine besonders bevorzugte Ausführungsform der Erfindung ist dadurch gekennzeichnet, dass als Füllstoff zumindest ein Ruß aus der Gruppe "Furnace-Ruß, Gas-Ruß, Flamm-Ruß" eingesetzt wird. Besonders bevorzugt ist im Rahmen der Erfindung die Verwendung von Furnace-Ruß. - Zweckmäßigerweise wird als Füllstoff zumindest ein Ruß eingesetzt, welcher Ruß eine Jodadsorptionszahl von 80 bis 400 mg/g, bevorzugt von 100 bis 300 mg/g aufweist (gemessen nach ASTM D 1510). - Vorzugsweise wird als Füllstoff zumindest ein Ruß verwendet, welcher Ruß eine BET-Oberfläche von 200 bis 900 m²/g, bevorzugt von 200 bis 600 m²/g aufweist (gemessen nach DIN ISO 9277).

Empfohlenermaßen werden die Ausgangsstoffe zur Erzeugung der erfindungsgemäßen Formteilchen bzw. Pellets - das heißt also insbesondere der zumindest eine Kautschuk und der zumindest eine Füllstoff bzw. Ruß - in einem Extrusionsmischer oder in einem Paddle-Mischer gemischt und dann anschließend zu den Formteilchen bzw. Pellets geformt. - Es liegt im Rahmen der Erfindung, dass die Formteilchen bzw. die Pellets nach ihrer Formung getrocknet bzw. nachgetrocknet werden. Dabei wird die nach der Mischung in den Formteilchen bzw. Pellets verbleibende Restfeuchte entfernt bzw. im Wesentlichen entfernt. - Die mit dem erfindungsgemäßen Verfahren erzeugten Formteilchen bzw. Pellets haben in der Regel hydrophobe und lipophile Eigenschaften.

Gemäß besonders bevorzugter Ausführungsform der Erfindung beträgt der Kautschukanteil der Formteilchen bzw. Pellets, insbesondere der getrockneten Formteilchen bzw. Pellets 10 bis 30 Gew.-%, bevorzugt 12 bis 25 Gew.-%. - Es liegt im Rahmen der Erfindung, dass die erfindungsgemäß erzeugten Formteilchen bzw. Pellets, vorzugsweise die getrockneten Formteilchen bzw. Pellets zu mindestens 80 Gew.-%, bevorzugt zu mindestens 85 Gew.-% und sehr bevorzugt zu mindestens 90 Gew.-% aus Kautschuk und Füllstoff bzw. Ruß bestehen. Grundsätzlich können die erfindungsgemäß erzeugten Formteilchen bzw. Pellets weitere Zusätze wie Mineralien und/oder Metallsalze oder dergleichen aufweisen. Hauptbestandteile der Formteilchen bzw. Pellets sind jedoch Kautschuk und Füllstoff, insbesondere Ruß.

Es liegt im Rahmen der Erfindung, dass die mit dem Verfahren erzeugten Formteilchen bzw. Pellets, insbesondere die getrockneten Formteilchen bzw. Pellets unmittelbar bzw. im Wesentlichen unmittelbar als Adsorptionsmittel zur Reinigung von fluiden Medien eingesetzt werden. Dass die Formteilchen/Pellets unmittelbar eingesetzt werden, meint dabei insbesondere, dass die Formteilchen/Pellets keinen chemischen Behandlungsmaßnahmen und vorzugsweise auch keinen weiteren physikalischen Behandlungsmaßnahmen unterzogen werden.

Wie bereits eingangs dargelegt, werden mit dem Adsorptionsmittel bzw. mit den erfindungsgemäßen Formteilchen/Pellets vor allem organische Substanzen aus flüssigen bzw. wässrigen Medien entfernt. Bei den organischen Substanzen handelt es sich vornehmlich um Kohlenwasserstoffe und insbesondere um aromatische Kohlenwasserstoffe. Es liegt im Rahmen der Erfindung, dass die Formteilchen bzw. Pellets im trockenen Zustand und bevorzugt in Form einer losen Schüttung als Adsorptionsmittel eingesetzt werden. Empfohlenermaßen beträgt die Schüttdichte der Formteilchen bzw. Pellets 250 bis 500 g/l, bevorzugt 300 bis 450 g/l.

Gegenstand der Offenbarung ist auch ein von einem zu reinigenden fluiden bzw. flüssigen Medium durchströmbarer Adsorptionsbeutel (Adsorptionspad) mit fluiddurchlässigen Beutelwandungen und einem im Beutelinnenraum bzw. zwischen den Beutelwandungen des Beutels aufgenommenen Adsorptionsmittel, wobei die Beutelwandungen aus zumindest einem fluiddurchlässigen Vliesstoff aus Fasern bzw. Filamenten bestehen bzw. im Wesentlichen bestehen und wobei im Beutelinnenraum Formteilchen bzw. Pellets des Adsorptionsmittels - insbesondere hergestellt nach dem vorstehend erläuterten Verfahren - aufgenommen sind und wobei die Formteilchen bzw. Pellets zu mindestens 85 Gew.-%, bevorzugt zu mindestens 90 Gew.-% aus zumindest einem Kautschuk sowie zumindest einem Füllstoff, insbesondere Ruß bestehen. Statt des Begriffes Adsorptionsbeutel wird hier auch der Begriff Adsorptionspad verwendet. Die in dem Adsorptionsbeutel bzw. Adsorptionspad aufgenommenen Formteilchen bzw. Pellets haben empfohlenermaßen einen maximalen Durchmesser von 0,8 bis 5 mm, vorzugsweise von 1 bis 4,7 mm und bevorzugt von 1,2 bis 4 mm. - Es liegt im Rahmen der Erfindung, dass die bereits getrockneten Formteilchen bzw. Pellets in den Adsorptionsbeutel eingebracht werden bzw. in dem Beutelinnenraum des Adsorptionsbeutels aufgenommen sind. Der für die Beutelwandungen des Beutels eingesetzte fluiddurchlässige Vliesstoff besteht empfohlenermaßen aus Endlosfilamenten. Vorzugsweise handelt es sich dabei um Filamente bzw. Endlosfilamente aus zumindest einem Polyolefin, insbesondere aus Polypropylen. Es liegt im Übrigen im Rahmen der Erfindung, dass der Absorptionsbeutel allseitig geschlossen bzw. im Wesentlichen geschlossen ausgeführt ist. - Der Erfindung liegt die Erkenntnis zugrunde, dass ein Adsorptionsbeutel (Adsorptionspad) ein einfach zu handhabendes Adsorptionsaggregat darstellt, mit dem eine effektive Adsorption von Verunreinigungen - insbesondere von organischen Verunreinigungen - in fluiden Medien möglich ist.

Eine besonders empfohlene Ausführungsform des Adsorptionsbeutels ist dadurch gekennzeichnet, dass der Beutelinnenraum des Beutels in eine Mehrzahl von Beutelkammern unterteilt ist, wobei jede Beutelkammer mit dem Adsorptionsmittel in Form der Formteilchen bzw. Pellets gefüllt ist und wobei die Unterteilung des Beutelinnenraumes in die Beutelkammern durch Unterteilungsabschnitte zwischen den Beutelkammern realisiert ist. Es liegt dabei im Rahmen der Erfindung, dass die Beutelkammern jeweils allseitig geschlossen bzw. im Wesentlichen geschlossen ausgebildet sind.

Gemäß einer bevorzugten Ausführungsform werden zur Verwirklichung der trennenden Unterteilungsabschnitte zwischen den Beutelkammern Wandungsabschnitte von gegenüberliegenden Beutelwandungen des Beutels miteinander verbunden. Dieses Verbinden von Wandungsabschnitten der gegenüberliegenden Beutelwandungen kann bevorzugt durch Vernähen bzw. Zusammennähen der Wandungsabschnitte erfolgen. Bei einer bewährten Ausführungsvariante werden dazu Wandungsabschnitte von gegenüberliegenden Beutelwandungen mit zumindest einer - insbesondere linearen bzw. im Wesentlichen linearen - Naht miteinander verbunden. Insoweit ergeben sich schmale linienförmige Unterteilungsabschnitte zwischen den Beutelkammern. Da die Beutelkammern nach bevorzugter Ausführungsform der Erfindung allseitig geschlossen ausgebildet sind, werden bei solchen linienförmigen bzw. linearen Unterteilungsabschnitten - beispielsweise Nähten - auch quer dazu angeordnete Unterteilungsabschnitte bzw. Nähte vorgesehen. - Zur Realisierung der trennenden Unterteilungsabschnitte zwischen den Beutelkammern können Wandungsabschnitte von gegenüberliegenden Beutelwandungen des Beutels auch stoffschlüssig miteinander verbunden werden, insbesondere durch Kleben und/oder Schweißen. Zur Verbindung kann dabei beispielsweise ein Heißkleben und/oder ein Ultraschallschweißen (US-Schweißen) stattfinden.

Eine bevorzugte Ausführungsform des Adsorptionsbeutels (Adsorptionspads) ist dadurch gekennzeichnet, dass der Beutelinnenraum in zueinander parallele bzw. in zueinander im Wesentlichen parallele Beutelkammern unterteilt ist. Zweckmäßigerweise sind zwischen den parallelen bzw. den im Wesentlichen parallelen Beutelkammern parallele bzw. im Wesentlichen parallele Unterteilungsabschnitte - insbesondere in Form von Nähten - angeordnet. Nach einer Ausführungsvariante ist ein (in der Draufsicht) streifenförmiger Adsorptionsbeutel in eine Mehrzahl von quer zur Streifenlänge angeordnete und parallel zueinander bzw. im Wesentlichen parallel zueinander orientierte Beutelkammern unterteilt. Zweckmäßigerweise handelt es sich dabei um längliche Beutelkammern (Länge größer als Breite bzw. Höhe), die sich bevorzugt von einem Rand des streifenförmigen Adsorptionsbeutels zum anderen gegenüberliegenden Rand des Beutels erstrecken. Empfohlenermaßen sind diese zueinander parallelen bzw. zueinander im Wesentlichen parallelen Beutelkammern durch schmale, ebenfalls zueinander parallele bzw. im Wesentlichen parallele Unterteilungsabschnitte getrennt. Bei den Unterteilungsabschnitten handelt es sich nach einer bewährten Ausführungsform um Nähte, mit denen jeweils gegenüberliegende Wandungsabschnitte der gegenüberliegenden Beutelwandungen miteinander vernäht werden. Dabei sind die Nähte vorzugsweise als lineare bzw. im Wesentlichen lineare Nähte zwischen den Beutelkammern ausgebildet. Zweckmäßigerweise erstrecken sich diese Nähte bzw. linearen Nähte ebenfalls von einem Rand des streifenförmigen Adsorptionsbeutels zum anderen gegenüberliegenden Rand des Adsorptionsbeutels.

Eine besonders empfohlene Ausführungsform des Adsorptionsbeutels ist dadurch gekennzeichnet, dass die Beutelkammern des Adsorptionsbeutels um die Unterteilungsabschnitte bzw. um die miteinander verbundenen Wandungsabschnitte zwischen den Beutelkammern zusammenfaltbar und/oder zusammenrollbar sind. Dabei entsteht zweckmäßigerweise ein im Querschnitt rundes bzw. im Wesentlichen rundes oder ein im Querschnitt rechteckförmiges bzw. im Wesentlichen rechteckförmiges Adsorptionsaggregat. Dieses Adsorptionsaggregat wird dann vorzugsweise von dem zu reinigenden fluiden Medium durchströmt, so dass die Verunreinigungen an den im Adsorptionsbeutel angeordneten Formteilchen bzw. Pellets adsorbiert werden können.

Es liegt im Rahmen der Erfindung, dass die Formteilchen bzw. Pellets, insbesondere die getrockneten Formteilchen bzw. Pellets in loser Schüttung in dem Adsorptionsbeutel bzw. in den Beutelkammern des Adsorptionsbeutels vorhanden sind. Dabei werden die Formteilchen bzw. Pellets zweckmäßigerweise von vornherein trocken bzw. im Wesentlichen trocken in den Adsorptionsbeutel bzw. in die Beutelkammern des Adsorptionsbeutels gefüllt. Es liegt somit im Rahmen der Erfindung, dass bei der Herstellung bzw. bei der Befüllung des Adsorptionsbeutels nicht mit Nasskomponenten bzw. Nassschichten gearbeitet wird. Es liegt weiterhin im Rahmen der Erfindung, dass der Adsorptionsbeutel zu allen Seiten hin geschlossen ist bzw. dass die einzelnen Beutelkammern des Adsorptionsbeutels zu allen Seiten hin geschlossen sind.

Gemäß bevorzugter Ausführungsform der Erfindung ist der fluiddurchlässige Vliesstoff der Beutelwandungen des Adsorptionsbeutels bzw. der Beutelkammern als Meltblown-Vliesstoff ausgeführt. Empfohlenermaßen weist der Vliesstoff bzw. der Meltblown-Vliesstoff ein Flächengewicht von 50 bis 90 g/m², bevorzugt von 60 bis 80 g/m² auf. Zweckmäßigerweise besteht der fluiddurchlässige Vliesstoff - insbesondere der Meltblown-Vliesstoff - aus Filamenten aus zumindest einem Polyolefin, insbesondere aus Polypropylen. Die Filamente des Meltblown-Vliesstoffes weisen vorzugsweise einen Filamentdurchmesser von 1 bis 15 µm, bevorzugt von 1 bis 10 µm auf.

Gegenstand der Erfindung ist eine Adsorptionsanlage - vorzugsweise eine mobile Adsorptionsanlage - gemäß Anspruch 1. Bei der erfindungsgemäßen Adsorptionsanlage handelt es sich um eine mehrstufige Adsorptionsanlage bzw. Reinigungsanlage. Neben den zumindest zwei Adsorptionsbehältern mit dem erfindungsgemäßen Adsorptionsmittel können weitere Adsorptionsbehälter vorhanden sein, die mit den erfindungsgemäßen Adsorptionsmittel und/oder mit anderen Reinigungsmitteln gefüllt sind.

Eine besonders bevorzugte Ausführungsform der erfindungsgemäßen Adsorptionsanlage ist dadurch gekennzeichnet, dass der in Strömungsrichtung des zu reinigenden fluiden Mediums erste Adsorptionsbehälter ein um 20 bis 60 %, vorzugsweise ein um 25 bis 55 % und bevorzugt ein um 30 bis 50 % größeres Volumen aufweist als der in Strömungsrichtung nachgeschaltete zweite Adsorptionsbehälter. Bei dieser Auslegung der mit dem Adsorptionsmittel gefüllten Adsorptionsbehälter wird eine besonders effektive Adsorption bzw. Reinigung des fluiden Mediums erzielt.

Gemäß der Erfindung ist in jedem der mit dem Adsorptionsmittel gefüllten Adsorptionsbehälter jeweils zumindest ein - vorzugsweise auswechselbarer - durchströmbarer Adsorptionsbeutel (Adsorptionspad) angeordnet, wobei die Beutelwandungen des Adsorptionsbeutels aus einem fluiddurchlässigen Vliesstoff aus Fasern bzw. Filamenten bestehen bzw. im Wesentlichen bestehen und wobei im Beutelinnenraum des Adsorptionsbeutels Formteilchen bzw. Pellets eines Adsorptionsmittels - insbesondere hergestellt nach dem oben beschriebenen Verfahren - aufgenommen sind und wobei die Formteilchen bzw. Pellets zu mindestens 85 Gew.-%, bevorzugt zu mindestens 90 Gew.-% aus zumindest einem Kautschuk sowie zumindest einem Füllstoff, insbesondere Ruß, bestehen. Das Adsorptionsmittel bzw. die Formteilchen/Pellets können in einer auswechselbaren Kartusche untergebracht sein, die in einen Adsorptionsbehälter eingeführt werden kann bzw. zum Austausch einem Adsorptionsbehälter auch entnommen werden kann. Ein mit dem Adsorptionsmittel gefüllter Adsorptionsbeutel kann fernerhin in einem in einem Adsorptionsbehälter aufgenommenen Drahtkorb vorgesehen sein. Dann kann der mit dem zumindest einen Adsorptionsbeutel gefüllte Drahtkorb zum Auswechseln des Adsorptionsbeutels aus dem Adsorptionsbehälter auf einfache Weise entnommen werden. Ein solcher in einem Adsorptionsbehälter angeordneter Drahtkorb kann effektiv von einer zu reinigenden Flüssigkeit durchströmt werden. - Ein in einem Adsorptionsbehälter der Adsorptionsanlage aufgenommener Adsorptionsbeutel weist zweckmäßigerweise einen runden oder einen rechteckförmigen bzw. quadratischen Querschnitt auf.

Eine sehr bevorzugte Ausführungsform der erfindungsgemäßen Adsorptionsanlage ist dadurch gekennzeichnet, dass in zumindest einem mit dem Adsorptionsmittel gefüllten Adsorptionsbehälter zumindest zwei in Strömungsrichtung des zu reinigenden fluiden Mediums hintereinander angeordnete - vorzugsweise auswechselbare - Adsorptionsbeutel vorhanden sind. Gemäß besonders empfohlener Ausführungsform sind dabei die in einem Adsorptionsbehälter hintereinander angeordneten Adsorptionsbeutel jeweils in eine Mehrzahl von Beutelkammern mittels Unterteilungsabschnitten unterteilt. Wie bereits oben dargelegt, handelt es sich bei den Unterteilungsabschnitten empfohlenermaßen um miteinander verbundene - insbesondere miteinander vernähte - gegenüberliegende Wandungsabschnitte der Adsorptionsbeutelwandungen handeln. Vorzugsweise sind die Beutelkammern bzw. die Unterteilungsabschnitte von zwei in dem Adsorptionsbehälter hintereinander angeordneten Adsorptionsbeuteln bezüglich der Strömungsrichtung des zu reinigenden fluiden Mediums versetzt zueinander angeordnet. Der Versatz wird zweckmäßigerweise derart gewählt, dass in Strömungsrichtung des fluiden Mediums hinter einer Beutelkammer eines zuerst durchströmten Adsorptionsbeutels - beispielsweise mittig in Bezug auf die Beutelkammer - ein Unterteilungsabschnitt nachgeschaltet ist. Es wird also vorzugsweise dafür Sorge getragen, dass möglichst nicht zwei Unterteilungsabschnitte zweiter Adsorptionsbeutel in Strömungsrichtung in Reihe hintereinander geschaltet sind.

Nach einer bevorzugten Ausführungsform der Erfindung ist bei einem in der Draufsicht streifenförmigen Adsorptionsbeutel zumindest eine Reihe von nebeneinander angeordneten Beutelkammern in Längsrichtung des streifenförmigen Beutels orientiert. Die Beutelkammern sind zweckmäßigerweise durch quer zur Längsrichtung des streifenförmigen Beutels angeordnete Unterteilungsabschnitte voneinander separiert. Bei diesen Unterteilungsabschnitten handelt es sich insbesondere um Nähte quer zur Längsrichtung des streifenförmigen Beutels. Empfohlenermaßen wird dieser streifenförmige Adsorptionsbeutel gleichsam um die Unterteilungsabschnitte aufgerollt bzw. zusammengefaltet, so dass vorzugsweise ein im Querschnitt rundes oder ein im Querschnitt rechteckförmiges Adsorptionsaggregat resultiert. Gemäß einer bevorzugten Ausführungsform werden zumindest zwei solcher Adsorptionsbeutel bzw. Adsorptionsaggregate in Strömungsrichtung hintereinander in einem Adsorptionsbehälter der erfindungsgemäßen Adsorptionsanlage positioniert. Die Positionierung erfolgt dabei vorzugsweise in der Weise, dass die Unterteilungsabschnitte bzw. Nähte parallel zur Strömungsrichtung bzw. im Wesentlichen parallel zur Strömungsrichtung des zu reinigenden fluiden Mediums angeordnet sind. Nach besonders empfohlener Ausführungsform der Erfindung werden die beiden zusammengerollten bzw. zusammengefalteten Adsorptionsbeutel bzw. die beiden Adsorptionsaggregate bezüglich der Strömungsrichtung des fluiden Mediums versetzt zueinander in dem Adsorptionsbehälter untergebracht. Wenn bei dieser Ausführungsform auf gleiche Weise bzw. im Wesentlichen auf gleiche Weise zusammengefaltete bzw. zusammengerollte Adsorptionsaggregate hintereinander angeordnet sind, werden diese zweckmäßigerweise um 90° versetzt zueinander in dem Adsorptionsbehälter untergebracht. Dabei ist vorzugsweise ein Unterteilungsabschnitt hinter einer Beutelkammer bzw. in etwa mittig hinter einer Beutelkammer angeordnet. Auf diese Weise wird eine sehr effektive Adsorption bezüglich des zu reinigenden fluiden bzw. flüssigen Mediums erzielt.

Eine besonders bevorzugte Ausführungsvariante ist dadurch gekennzeichnet, dass die mit den adsorbierten Stoffen bzw. Verunreinigungen beladenen Formteilchen/Pellets einer Verbrennung zur Energiegewinnung zugeführt werden können. Insbesondere können die Adsorptionsbeutel nach vollendeter Adsorption zerkleinert bzw. geschreddert werden und das Zerkleinerungsmaterial einer Verbrennung zwecks Energiegewinnung zugeführt werden. Nach einer Ausführungsform kann das zerkleinerte Adsorptionsmittel in Verbindung mit Deponie-Abfällen der Verbrennung zwecks Energiegewinnung zugeführt werden. Der Erfindung liegt insoweit die Erkenntnis zugrunde, dass auf diese Weise ein relativ hochkalorischer Brennstoff erzeugt werden kann. Insofern kann das mit Verunreinigungen beladene Adsorptionsmittel auf einfache und wenig kostspielige Weise entsorgt und weiterverwertet werden.

Der Erfindung liegt die Erkenntnis zugrunde, dass mit dem Verfahren auf einfache und wenig aufwendige Weise ein effektives Adsorptionsmittel erzeugt werden kann. Mit dem in Form von Formteilchen bzw. Pellets vorliegenden Adsorptionsmittel können auch stark mit Verunreinigungen beladene fluide bzw. wässrige Medien funktionssicher und wirksam gereinigt werden. Das gilt vor allem für mit organischen Verunreinigungen, insbesondere mit aromatischen Kohlenwasserstoffen beladene fluide bzw. wässrige Medien. Die erfindungsgemäß erzeugten Formteilchen bzw. Pellets sind kompakt, abriebfest und gut rieselfähig. Von daher zeichnen sich die Formteilchen bzw. Pellets auch im Hinblick auf ihre Handhabung und ihren Transport durch Vorteile aus. Der Erfindung liegt weiterhin die Erkenntnis zugrunde, dass die Adsorptionspads auf einfache Weise mit den erzeugten Formteilchen bzw. Pellets befüllt werden können. Vor allem sind auch diese Adsorptionsbeutel einfach handhabbar und zeichnen sich durch eine effektive und funktionssichere Adsorption von Verunreinigungen aus. Die Adsorptionsbeutel werden problemlos von einem zu reinigenden fluiden Medium durchströmt. Nichtsdestoweniger wird das Adsorptionsmittel in Form der Formteilchen bzw. Pellets in dem Adsorptionsbeutel sicher zurückgehalten ohne dass es zu unerwünschten Ausschlämmungen oder dergleichen kommt. Die Adsorptionsbeutel können auch auf sehr effektive Weise in einer erfindungsgemäßen Adsorptionsanlage, vorzugsweise in einer mobilen Adsorptionsanlage eingesetzt werden. Diese Adsorptionsanlage zeichnet sich durch Flexibilität und Variabilität aus. Sie ist einfach transportierbar und gewährleistet nichtsdestoweniger eine sehr effektive und funktionssichere Dekontamination beladener fluider Medien bzw. wässriger Medien. Eine erfindungsgemäße Adsorptionsanlage zeichnet sich weiterhin durch den Vorteil aus, dass das in den Adsorptionsbehältern aufgenommene Adsorptionsmittel bzw. die dort aufgenommenen Adsorptionsbeutel einfach und schnell ausgewechselt werden können. Das kann auch im laufenden Betrieb der Adsorptionsanlage geschehen, wenn ein von der Auswechslung eines Adsorptionsbeutels betroffener Adsorptionsbehälter durch einen Bypass-Betrieb vorübergehend außer Betrieb gesetzt wird. Zusammenfassend ist festzustellen, dass die Erfindung mit einfachen und wenig kostspieligen Maßnahmen auskommt.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht eines Adsorptionsbeutels mit einer Mehrzahl von nebeneinander angeordneten Beutelkammern,
- Fig. 2: den Gegenstand gemäß Fig. 1 in aufgerolltem Zustand und
- Fig. 3: eine schematische Darstellung einer erfindungsgemäßen Adsorptionsanlage.

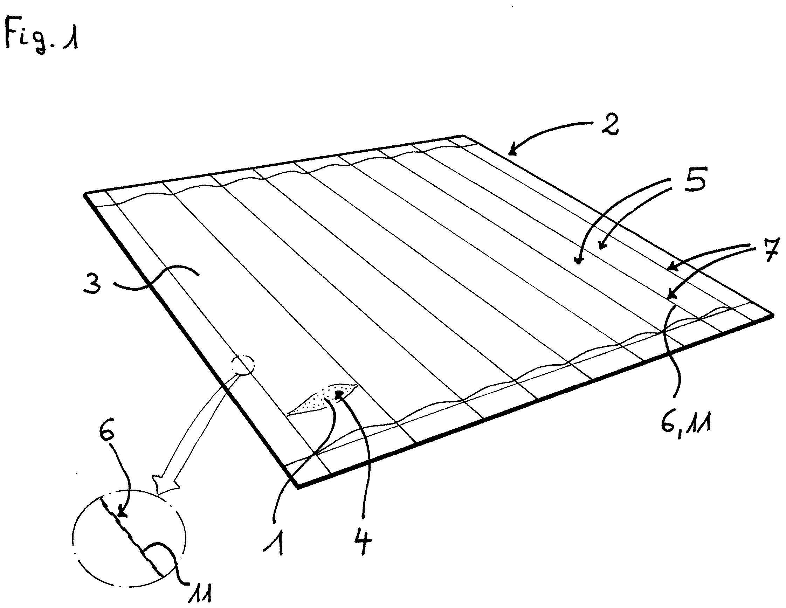

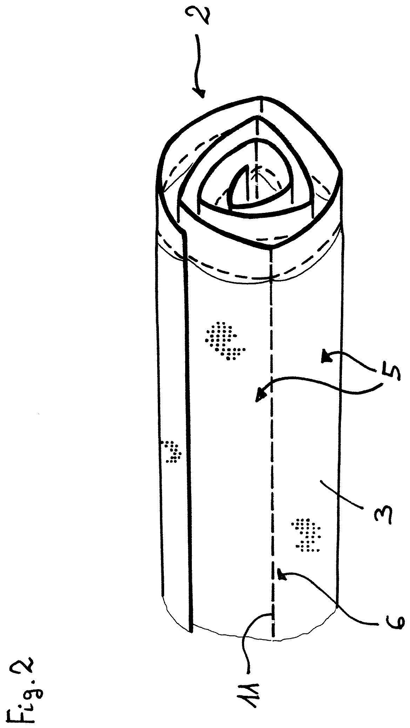

In den Fig. 1 und 2 ist ein mit dem Adsorptionsmittel gefüllter Adsorptionsbeutel 2 dargestellt. In der Fig. 1 ist dabei dieser Adsorptionsbeutel 2 im flach auseinandergelegten Zustand gezeigt. Der Adsorptionsbeutel 2 weist fluiddurchlässige Beutelwandungen 3 auf und in dem Beutelinnenraum 4 zwischen den Beutelwandungen 3 ist das Adsorptionsmittel in Form von erfindungsgemäß hergestellten Pellets 1 aufgenommen. Vorzugsweise und im Ausführungsbeispiel bestehen die Beutelwandungen 3 des Adsorptionsbeutels 2 aus einem fluiddurchlässigen Vliesstoff aus Endlosfilamenten. Bei dem Vliesstoff mag es sich im Ausführungsbeispiel um einen Meltblown-Vliesstoff handeln. Die Endlosfilamente bestehen bevorzugt und im Ausführungsbeispiel aus Polypropylen und weisen zweckmäßigerweise einen Durchmesser von 1 bis 10µm auf. Das Flächengewicht des Meltblown-Vliesstoffes beträgt vorzugsweise 60 bis 80 g/m².

Im Ausführungsbeispiel nach Fig. 1 sind für die Bildung des Adsorptionsbeutels 2 zwei Vliesstoffe bzw. Meltblown-Vliesstoffe übereinander gelegt und mit Hilfe von Nähten 11 miteinander verbunden. Dabei wird der Adsorptionsbeutel 2 in mehrere in einer Reihe nebeneinander angeordnete Beutelkammern 5 unterteilt, wobei die Beutelkammern 5 bevorzugt und im Ausführungsbeispiel parallel zueinander angeordnet sind. Sie sind empfohlenermaßen und im Ausführungsbeispiel allseitig von den Nähten 11 umschlossen und in jeder Beutelkammer 5 ist das Adsorptionsmittel in Form der Pellets 1 aufgenommen. Benachbarte parallel zueinander angeordnete Beutelkammern 5 sind durch Unterteilungsabschnitte 6 voneinander getrennt, die bevorzugt und im Ausführungsbeispiel durch die längs verlaufenden Nähte 11 realisiert werden. Empfohlenermaßen und im Ausführungsbeispiel werden diese Unterteilungsabschnitte 6 bzw. die längs verlaufenden Nähte 11 dadurch gebildet, dass Wandungsabschnitte 7 der beiden gegenüberliegenden Vliesstoffe bzw. Beutelwandungen 3 miteinander verbunden bzw. bevorzugt durch Vernähen miteinander verbunden werden. Somit ergeben sich schmale linienförmige Unterteilungsabschnitte 6 bzw. längs verlaufende Nähte 11.

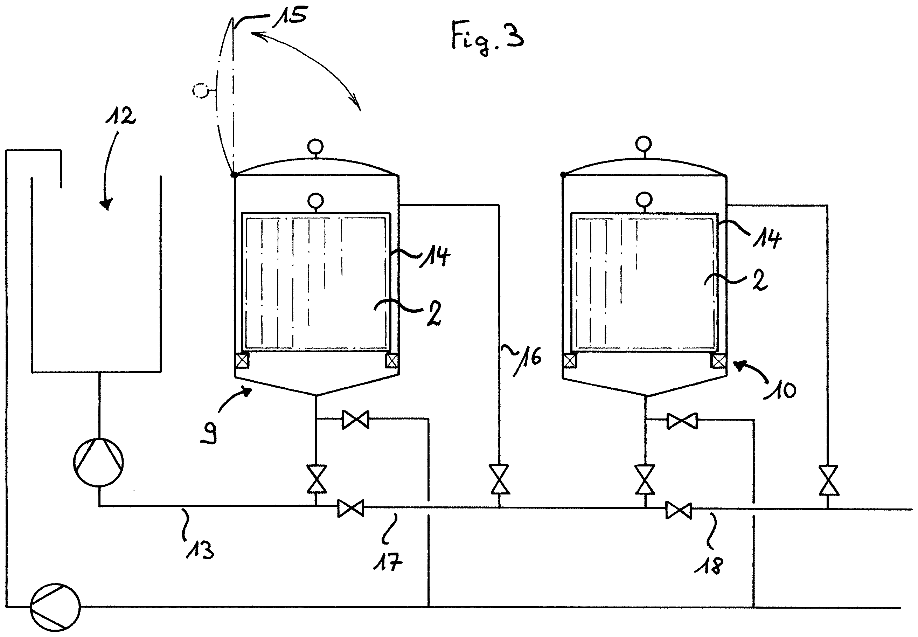

Nach besonders bewährter Ausführungsform und im Ausführungsbeispiel wird der Adsorptionsbeutel 2 um die Unterteilungsabschnitte 6 bzw. um die längs verlaufenden Nähte 11 herum aufgerollt, so dass ein im Querschnitt in etwa rundes Adsorptionsaggregat gemäß Fig. 2 gebildet wird. Dieses Adsorptionsaggregat aus einem Adsorptionsbeutel 2 mit einer Mehrzahl von Beutelkammern 5 kann in einen Adsorptionsbehälter 9, 10 einer in Fig. 3 dargestellten Adsorptionsanlage 8 eingesetzt werden.

Die in Fig. 3 gezeigte Adsorptionsanlage 8 weist zwei mit dem Adsorptionsmittel versehene Adsorptionsbehälter 9, 10 auf, die in Strömungsrichtung des zu reinigenden fluiden Mediums in Reihe hintereinander geschaltet sind. Bei dem mit der Adsorptionsanlage 8 gemäß Fig. 3 zu reinigenden fluiden Medium mag es sich um ein mit aromatischen Kohlenwasserstoffen belastetes wässriges Medium handeln. Auf der linken Seite der Fig. 3 ist ein Vorratsbehälter 12 für dieses verunreinigte wässrige Medium zu erkennen, das aus dem Vorratsbehälter 12 über die Rohrleitung 13 von unten in den ersten Adsorptionsbehälter 9 einströmt. In dem ersten Adsorptionsbehälter 9 ist bevorzugt und im Ausführungsbeispiel ein auswechselbarer Drahtkorb 14 aufgenommen, der mit zumindest einem Adsorptionsbeutel 2, insbesondere mit einem aufgerollten Adsorptionsbeutel 2 gemäß Fig. 2 befüllt ist. Dabei verlaufen die Unterteilungsabschnitte 6 bzw. die längs verlaufenden Nähte 11 des aufgerollten Adsoptionsbeutels 2 empfohlenermaßen parallel zur Strömungsrichtung des fluiden Mediums durch den Adsorptionsbehälter 9. Zum Auswechseln des in dem Drahtkorb 14 aufgenommenen Adsorptionsbeutels 2 kann der Drahtkorb 14 von oben aus dem Adsorptionsbehälter 9 entnommen werden. Dazu kann - wie in der Fig. 3 angedeutet - ein Deckel 15 des Adsorptionsbehälters 9 geöffnet werden. Das durch den Drahtkorb 14 und den Adsorptionsbeutel 2 des ersten Adsorptionsbehälters 9 geführte flüssige bzw. wässrige Medium verlässt dann den Adsorptionsbehälter 9 wieder über die Rohrleitung 16 und strömt im Anschluss daran von unten nach oben durch den Adsorptionsbehälter 10. Vorzugsweise und im Ausführungsbeispiel ist auch in dem zweiten Adsorptionsbehälter 10 ein Drahtkorb 14 mit einem darin aufgenommenen auswechselbaren Adsorptionsbeutel 2 untergebracht. Hier gilt das bereits zum ersten Adsorptionsbehälter 9 Beschriebene.

Nach einer bevorzugten Ausführungsform der Erfindung können in einem Drahtkorb 14 eines Adsorptionsbehälters 9, 10 zwei übereinander angeordnete aufgerollte Adsorptionsbeutel 2 gemäß Fig. 2 angeordnet werden. Dabei sind die Unterteilungsabschnitte 6 bzw. die längs verlaufenden Nähte 11 der Adsorptionsbeutel 2 parallel zur Strömungsrichtung des flüssigen Mediums orientiert. Nach besonders bewährter Ausführungsform der Erfindung werden dabei die beiden aufgerollten Adsorptionsbeutel 2 versetzt übereinander angeordnet. Das bedeutet insbesondere, dass ein aufgerollter Adsorptionsbeutel 2 gegenüber dem zweiten aufgerollten Adsorptionsbeutel 2 um einen bestimmten Winkelbereich - insbesondere um 90° - verdreht bzw. versetzt angeordnet ist. Auf diese Weise wird erreicht, dass sich hinter einer Beutelkammer 5 des ersten Adsorptionsbeutels 2 in Strömungsrichtung des fluiden Mediums ein Unterteilungsabschnitt 6 befindet, so dass möglichst nicht zwei Unterteilungsabschnitte 6 der beiden Adsorptionsbeutel 2 hintereinander in Reihe angeordnet sind.

In der Fig. 3 ist weiterhin erkennbar, dass der erste Adsorptionsbehälter 9 und/oder der zweite Adsorptionsbehälter 10 zwecks Auswechslung des zumindest einen Adsorptionsbeutels 2 kurzfristig außer Betrieb gesetzt werden können. Dazu kann dann das zu reinigende fluide Medium über Bypass-Leitungen 17, 18 nach entsprechender Ventilbetätigung an den Adsorptionsbehältern 9, 10 vorbeiströmen.

In der Fig. 3 sind lediglich zwei hintereinander in Reihe geschaltete Adsorptionsbehälter 9, 10 erkennbar. Grundsätzlich kann die erfindungsgemäße Adsorptionsanlage 8 aber auch noch mehr Adsorptionsbehälter aufweisen. Diese zusätzlichen Adsorptionsbehälter können das Adsorptionsmittel enthalten oder auch alternativ weitere Reinigungsmittel für das zu reinigende fluide Medium enthalten.

Nach besonders bevorzugter Ausführungsform der Erfindung ist die erfindungsgemäße Adsorptionsanlage 8 als mobile Adsorptionsanlage 8 ausgeführt. Dann kann diese Adsorptionsanlage 8 beispielsweise auf Schiffen zur Reinigung von verunreinigtem Meerwasser oder dergleichen eingesetzt werden. Die erfindungsgemäße Adsorptionsanlage 8 zeichnet sich durch Kompaktheit und einfachen Aufbau aus und gewährleistet mit dem hergestellten Adsorptionsmittel bzw. mit den Adsorptionsbeuteln eine sehr funktionssichere und effektive Adsorption von Verunreinigungen, insbesondere von organischen Verunreinigungen wie aromatischen Kohlenwasserstoffen.

## Patentansprüche

1. Adsorptionsanlage, vorzugsweise mobile Adsorptionsanlage, insbesondere für die Adsorption von organischen Substanzen aus fluiden Medien, wobei zumindest zwei von dem zu reinigenden fluiden Medium nacheinander durchströmbare Adsorptionsbehälter (9, 10) vorhanden sind,
wobei in jedem der mit einem Adsorptionsmittel befüllten Adsorptionsbehältern (9, 10) jeweils zumindest ein - vorzugsweise auswechselbarer - Adsorptionsbeutel (2) angeordnet ist,
wobei die Beutelwandungen (3) des Adsorptionsbeutels (2) aus einem fluiddurchlässigen Vliesstoff aus Fasern bzw. Filamenten bestehen bzw. im Wesentlichen bestehen
und wobei im Beutelinnenraum (4) der Adsorptionsbeutel (2) Formteilchen bzw. Pellets (1) des Adsorptionsmittels aufgenommen sind, wobei die Formteilchen bzw. Pellets (1) zu mindestens 85 Gew.-%, bevorzugt zu mindestens 90 Gew.-% aus zumindest einem Kautschuk sowie zumindest einem Füllstoff, insbesondere Ruß, bestehen,
wobei die Formteilchen bzw. Pellets (1) in loser Schüttung in dem Adsorptionsbeutel (2) vorhanden sind und wobei die Schüttdichte der Formteilchen bzw. Pellets (1) 250 bis 500 g/l beträgt.

2. Adsorptionsanlage nach Anspruch 1, wobei der Beutelinnenraum (4) in eine Mehrzahl von Beutelkammern (5) unterteilt ist, wobei jede Beutelkammer (5) mit dem Adsorptionsmittel gefüllt ist und wobei die Unterteilung des Beutelinnenraumes (4) in die Beutelkammern (5) durch Erzeugung von Unterteilungsabschnitten (6) bzw. durch Verbinden von Wandungsabschnitten (7) von gegenüberliegenden Beutelwandungen (3) erfolgt.

3. Adsorptionsanlage nach einem der Ansprüche 1 oder 2, wobei der Beutelinnenraum (4) in zueinander parallele bzw. im Wesentlichen zueinander parallele Beutelkammern (5) unterteilt ist, wobei zwischen den parallelen bzw. im Wesentlichen parallelen Beutelkammern (5) parallele bzw. im Wesentliche parallele Unterteilungsabschnitte (6) angeordnet sind.

4. Adsorptionsanlage nach einem der Ansprüche 2 oder 3, wobei die Beutelkammern (5) des Adsorptionsbeutels (2) um die Unterteilungsabschnitte zusammenrollbar und/oder zusammenfaltbar sind, so dass insbesondere ein im Querschnitt rundes bzw. im Wesentlichen rundes oder ein im Querschnitt rechteckiges bzw. im Wesentlichen rechteckiges Adsorptionsaggregat entsteht.

5. Adsorptionsanlage nach einem der Ansprüche 1 bis 4, wobei die Schüttdichte der Formteilchen bzw. Pellets (1) 300 bis 450 g/l beträgt.

6. Adsorptionsanlage nach einem der Ansprüche 1 bis 5, wobei der fluiddurchlässige Vliesstoff der Beutelwandungen (3) bzw. der Beutelkammerwandungen als Meltblown-Vliesstoff ausgebildet ist und wobei der Meltblown-Vliesstoff vorzugsweise ein Flächengewicht von 50 bis 90 g/m², bevorzugt von 60 bis 80 g/m² aufweist.

7. Adsorptionsanlage nach einem der Ansprüche 1 bis 6, wobei der in Strömungsrichtung des fluiden Mediums erste Adsorptionsbehälter (9) ein um 20 bis 60 %, vorzugsweise ein um 25 bis 55 % und bevorzugt ein um 30 bis 50 % größeres Volumen aufweist als der in Strömungsrichtung nachgeschaltete zweite Adsorptionsbehälter (10).

8. Adsorptionsanlage nach einem der Ansprüche 1 bis 7, wobei in zumindest einem Adsorptionsbehälter (9, 10) zumindest zwei in Strömungsrichtung des zu reinigenden fluiden Mediums hintereinander angeordnete - vorzugsweise auswechselbare - Adsorptionsbeutel (2) vorhanden sind.

9. Adsorptionsanlage nach Anspruch 8, wobei die in einem Adsorptionsbehälter (9, 10) hintereinander angeordneten Adsorptionsbeutel (2) jeweils in eine Mehrzahl von Beutelkammern (5) mittels Unterteilungsabschnitten (6) unterteilt sind und wobei die Beutelkammern (5) bzw. die Unterteilungsabschnitte (6) bezüglich der Strömungsrichtung des zu reinigenden fluiden Mediums versetzt zueinander angeordnet sind.

## Claims

1. Absorption system, preferably a mobile absorption system, in particular, for the absorption of organic substances from fluid media, wherein two absorption containers (9, 10), which can be subsequently flowed through by the fluid medium to be cleansed, are available,
wherein, at least one absorption bag (2) - preferably a replaceable one - is arranged in each of the absorption containers (9, 10) filled with an absorption agent,
wherein the bag walls (3) of the absorption bag (2) are made of fluid-permeable non-woven fabric consisting of fibres or filaments and are primarily made thereof.
and wherein shaped particles or pellets (1) of the absorption agent are accommodated within the inner bag space (4) of the absorption bag (2), wherein the shaped particles or pellets (1) are made of a percentage of least 85% by weight, preferably at least 90% by weight of at least one natural rubber and at least one filler material, in particular, carbon black.
wherein the shaped particles or pellets (1) are loosely filled in the adsorption bag (2) and wherein the bulk density of the shaped particles or pellets (1) is 250 to 500 g/l.

2. Absorption system according to Claim 1, wherein the inner bag space (4) is divided into a plurality of bag chambers (5), wherein each bag chamber (5) is filled with the absorption agent and wherein the division of the inner bag space (4) into the bag chambers (5) takes place by means of creating dividers (6) or by connecting the wall sections (7) of opposite bag walls (3).

3. Absorption system according to one of the Claims 1 or 2, wherein the inner bag space (4) is divided into bag chambers (5), which are parallel to each other or primarily parallel to each other, wherein parallel or primarily parallel dividers (6) are arranged between the parallel or primary parallel bag chambers (5).

4. Absorption system according to one of the Claims 2 or 3, wherein the bag chambers (5) of the absorption bag (2) can be rolled together or folded together around the dividers so that, in particular, an adsorption unit results, the cross section of which is round or primarily round or rectangular or primarily rectangular.

5. Absorption system according to one of the Claims 1 to 4, wherein the bulk density 15 of the shaped particles or pellets (1) is 300 to 450 g/l.

6. Absorption system according to one of the Claims 1 to 5, wherein the fluid-permeable non-woven fabric of the bag walls (3) or of the bag chamber walls is designed as a meltblown non-woven fabric and wherein the meltblown non-woven fabric preferably has a surface weight of 50 to 90 g/m², preferably 60 to 80 g/m².

7. Absorption system according to one of the Claims 1 to 6, wherein the first absorption container (9) in the flow direction of the fluid medium has a 20 to 60%, preferably a 25 to 55%, and preferably a 30 to 50% greater volume than the downstream second absorption container (10) in the flow direction.

8. Absorption system according to one of the Claims 1 to 7, wherein at least two absorption bags (2), which are subsequently arranged in the flow direction of the fluid media to be cleansed, are available in at least one absorption container (9, 10).

9. Absorption system according to Claim 8, wherein the absorption bags (2) which subsequently arranged in an absorption container (9, 10) are each divided into a plurality of bag chambers (5) by means of dividers (6) and wherein the bag chambers (5) or the dividers (6) are arranged offset to each other with reference to the flow direction of the medium to be cleansed.

## Revendications

1. Dispositif d'adsorption, de préférence dispositif d'adsorption mobile, notamment pour l'adsorption de substances organiques à partir de milieux fluides, au moins deux récipients d'adsorption (9, 10) susceptibles d'être traversés successivement par le milieu fluide à épurer étant présents,
dans chacun des récipients d'adsorption (9, 10) remplis d'un agent adsorbant étant placé chaque fois au moins un sachet d'adsorption (2) (de préférence interchangeable),
les parois de sachet (3) du sachet d'adsorption (2) étant constituées ou essentiellement constituées d'un non-tissé en fibres ou en filaments, perméable aux fluides
et dans l'espace intérieur de sachet (4) du sachet d'adsorption (2) étant réceptionnées des particules moulées ou des pastilles (1) de l'agent adsorbant, les particules moulées ou pastilles (1) étant constituées à au moins 85 % en poids, de préférence, à au moins 90 % en poids d'au moins un caoutchouc, ainsi que d'au moins un agent de charge, notamment de noir de carbone,
les particules moulées ou pastilles (1) étant présentes en vrac dans le sachet d'adsorption (2) et la masse volumique apparente des particules moulées pu pastilles (1) étant de 250 à 500 g/l.

2. Dispositif d'adsorption selon la revendication 1, l'espace intérieur de sachet (4) étant divisé en une pluralité de compartiments de sachet (5), chaque compartiment de sachet (5) étant rempli avec l'agent adsorbant et la division de l'espace intérieur de sachet (4) dans les compartiments de sachet (5) s'effectuant par création de segments de division (6) ou par liaison de segments de paroi (7) de parois de sachets (3) opposées.

3. Dispositif d'adsorption selon l'une quelconque des revendications 1 ou 2, l'espace intérieur du sachet (4) étant divisé en compartiments de sachet (5) parallèles les uns aux autres ou sensiblement parallèles les uns aux autres, entre les compartiments de sachet (5) parallèles ou sensiblement parallèles étant placés des segments de division (6).

4. Dispositif d'adsorption selon l'une quelconque des revendications 2 ou 3, les compartiments de sachet (5) du sachet d'adsorption (2) pouvant être enroulé et/ou replié autour des segments de division, de sorte à donner naissance notamment à un groupe d'adsorption ayant une section transversale ronde ou sensiblement ronde ou une section transversale rectangulaire ou sensiblement rectangulaire.

5. Dispositif d'adsorption selon l'une quelconque des revendications 1 à 4, la masse volumique apparente des particules moulées ou pastilles (1) étant de 300 à 450 g/l.

6. Dispositif d'adsorption selon l'une quelconque des revendications 1 à 5, le non-tissé perméable aux fluides des parois de sachets (3) ou des parois des compartiments de sachets étant conçu en non-tissé obtenu par extrusion-soufflage et le non-tissé obtenu par extrusion-soufflage présentant de préférence un grammage de 50 à 90 g/m², de préférence de 60 à 80 g/m².

7. Dispositif d'adsorption selon l'une quelconque des revendications 1 à 6, le premier récipient d'adsorption (9) dans la direction de circulation du milieu fluide présentant un volume supérieur de 20 à 60 %, de préférence, supérieur de 25 à 55 % et de manière préférentielle, supérieur de 30 à 50 % à celui du deuxième récipient d'adsorption (10) placé en aval dans la direction de circulation.

8. Dispositif d'adsorption selon l'une quelconque des revendications 1 à 7, dans au moins un récipient d'adsorption (9, 10) étant présents aux moins deux sachets d'adsorption (2) (de préférence interchangeables) placés l'un derrière l'autre dans la direction de circulation du milieu fluide à épurer.

9. Dispositif d'adsorption selon la revendication 8, les sachets d'adsorption (2) placés l'un derrière l'autre dans un récipient d'adsorption 9, 10) étant divisés chacun en une pluralité de compartiments de sachet (5) au moyen de segments de division (6) et les compartiments de sachet (5) ou les segments de division (6) étant placés en déport mutuel en rapport à la direction de circulation du milieu fluide à épurer.
